# EUROPEAN PATENT APPLICATION

(11) **EP 4 261 183 A1**
(43) Date of publication of application: **18.10.2023**
(21) Application number: 21902282.9
(22) Date of filing: 04.11.2021
(51) Int. Cl.: C01B 3/02, B01J 21/00, B01J 23/00, B01J 32/00, B01J 35/00

(54) **METHOD FOR GENERATING HYDROGEN MOLECULES BY MEANS OF ENERGY RADIATION**

(30) Priority: 11.12.2020 WO PCT/CN2020/135864
(71) Applicant: Beijing Guanghe Hydrogen Energy Technology Co., Ltd., Beijing 100089 (CN)
(72) Inventor: WANG, Cong, Beijing 100089 (CN); HUO, Haibin, Beijing 100089 (CN)
(74) Representative: Engelhard, Markus
(86) International application number: PCT/CN2021/128724
(87) International publication number: WO 2022/121575

(57) **Abstract**

A method for generating hydrogen by means of energy radiation. The method comprises: bringing a composite catalyst in contact with at least one hydrogen-containing source, and subjecting the composite catalyst and the hydrogen-containing source to energy radiation, so as to generate hydrogen molecules, wherein the composite catalyst includes at least one nano-substrate structure and at least one atomic site, the atomic sites includes one or two or more of the chemical elements Ru, Rh, Ag, Au, Pt, Pd, Os and Ir.

## Description

### FIELD OF THE INVENTION

The present invention relates to a method for catalytically producing hydrogen by means of energy radiation, specifically relates to a composite catalyst and use thereof in catalytically producing hydrogen by means of energy radiation.

### BACKGROUND

In the field of new energy resources, hydrogen has been considered as the most ideal and pollution-free green energy in the new century since the only product of hydrogen combustion is water. As the most abundant elements in nature, hydrogen widely exists in water, fossil fuel and various carbohydrates. As a major industrial raw material, hydrogen is also the most important industrial gas and special gas, and is used as an important raw material for synthesizing ammonia, methanol, and hydrochloric acid, and also used as a reducing agent for metallurgy, a hydrodesulfurizing agent for petroleum refining and the like.

However, traditional hydrogen producing methods consuming huge amounts of conventional energy lead over high cost for hydrogen energy and limit promotion and application of hydrogen energy. Scientists imaged to use the inexhaustible and low-cost solar energy as the primary energy in the formation of hydrogen energy, which opens broader prospect in development of hydrogen energy. Scientists found water could be decomposed into oxygen and hydrogen that are essential in a fuel cell by solar energy, by utilizing a photocatalytical material as a "media", and such a technology of producing hydrogen and oxygen by merely utilizing solar and water was called "one of the ideal technologies for human".

Plasmonic metal catalysts could immensely enhance local energy on surfaces of a nanosturcture due to plasmon effect. Accordingly, in a case of the overall reaction conditions are mild, the catalytic reaction could be efficiently promoted such that it is possible to conduct a reaction that could not be conducted under normal temperature and normal pressure. In recent years, it has been realized to decompose water into hydrogen and oxygen, but so far, it is still necessary to develop higher effective, more stable and cost effective catalysts.

The concept of single atom catalysis received widespread concern and research since it was proposed in recent years. As development of advanced characteristic technology, single atom catalysts provide the possibility to explain the structure-activity relationship of catalysts from molecular and atomic level, and to connect heterogeneous catalysis with homogeneous catalysis. Single atom catalysts show different activities, selectivities and stabilities from conventional nano catalysts, due to its special structures.

Therefore, it is possible to develop catalysts for producing hydrogen with efficiencies, stabilities and cost that satisfy commercial requirements, by coupling advantages of both plasmon effect and single atom catalysis.

### SUMMARY OF THE INVENTION

On the basis of the technical problems exist in the technical background, the present invention clarifies a novel plasmonic catalytic technology comprising atomic sites such as single atomic sites and/or atomic clusters having 2-25 atoms, and provides a unique method of preparing hydrogen by decomposing a hydrogen-containing source, preferably water, by light radiation and/or thermal radiation in the presence of a cost effective catalyst.

One aspect of the present invention is a method for producing hydrogen by means of energy radiation, comprising:
contacting a composite catalyst with at least one hydrogen-containing source, and
subjecting the composite catalyst and the hydrogen-containing source to energy radiation, to produce hydrogen molecules, wherein
the composite catalyst comprises at least one nano-base structure and at least one atomic sites, the atomic sites comprise one or two or more chemical elements selected from Ru, Rh, Ag, Au, Pt, Pd, Os, and Ir, preferably one or two selected from Ru and Au.

In certain embodiments, the atomic sites further comprise one or two or more chemical elements selected from Mn, Co, Fe, Al, Cu, Ni, Zn, Ti and La, preferably one or two or more selected from Co, Fe and Mn.

In certain embodiments, the energy radiation is at least on selected from light radiation and heat radiation, preferably light radiation.

In certain embodiments, a distance between the nano-base structure and the atomic sites is 5 nm or less, preferably 1 nm or less, more preferably less than 0.1 nm, most preferably the nano-base structure and the atomic site are in close contact with each other.

In certain embodiments, the atomic sites are bonded with the nano-base structure, for example by physical manner or chemical manner.

In certain embodiments, a mass percentage of the atomic sites and the nano-base structure is 50% or less, preferably 0.01% to 30%, preferably 0.01% to 5%, more preferably 0.1% to 2%, most preferably 0.1% to 1%.

In certain embodiments, the atomic sites are loaded on surface, internal pores of the nano-base structure, or distributed in internal crystal lattices of the nano-base structure, preferably respective atomic sites are dispersed uniformly and
intervals between respective atomic sites are 0.2-500 nm, preferably 1-50 nm, more preferably 1-20 nm.

In certain embodiments, the nano-base structure is selected from a group consisting of Mn, Co, Ce, Fe, Al, Ca, Ce, Cu, Ni, Ti, Zn, Si, Mo, Bi, V, C, N and oxides, nitrides, sulfites, carbides, hydroxides, chlorides thereof and metal-organic frameworks (MOF), preferably metal-organic frameworks, TiO₂, Al₂O₃, or CeO₂.

In certain embodiments, the composite catalyst is a catalyst in which Ru and Co are loaded on or bonded to TiO₂ (RuCo-TiO₂), a catalyst in which Ru is loaded on or bonded to Al₂O₃ (Ru-Al₂O₃), a catalyst in which Au is loaded on or bonded to Al₂O₃ (Au-Al₂O₃), or a catalyst in which Au is loaded on or bonded to CeO₂ (Au-CeO₂).

In preferable embodiments, the nano-base structure is about 1 nm to about 1000 nm, preferably about 70 nm to about 1000 nm, about 100 nm to about 800 nm, about 200 nm to 500 nm in at least one dimension of length, width and height.

In preferable embodiments, the nano-base structure each independently is about 1 nm to about 3000 nm in length, width or height, preferably about 100 nm to about 3000 nm, about 500 nm to about 2500 nm, or about 1000 nm to about 2000 nm in length, and/or about 1 nm to about 1000 nm, about 70 nm to about 1000 nm, about 100 nm to about 800 nm, or about 200 nm to about 500 nm in width or height, or
the nano-base structure each independently has an aspect ratio of about 1 to about 20, preferably an aspect ratio of about 1 to about 10, or about 2 to about 8.

In certain embodiments, the nano-base structure has a shape of spherical, spike, flake, needle, blade of grass, columnar, polyhedral, 3D cone, cuboidal, sheet, hemispherical, irregular 3D shape, porous structure or any combinations thereof.

In certain embodiments, a plurality of the atomic sites are arranged in a patterned configuration, preferably in a plurality of layers, on the nano-base structure, or
a plurality of the atomic sites are dispersed randomly in the nano-base structure and/or on an surface of the nano-base structure.

In certain embodiments, the energy radiation allows the reaction progresses at a temperature between about 20°C to about 500°C, preferably about 50°C to about 300°C, about 70°C to about 250°C, about 90°C to about 200°C, about 100°C to about 200°C, about 100°C to about 180°C, about 110°C to about 160°C, about 120°C to about 150°C, about 130°C to about 150°C, and
a catalyst activity per unit for producing hydrogen is more than 2 µmol g⁻¹ h⁻¹, preferably more than 3 µmol g⁻¹ h⁻¹, and more preferably more than 7 µmol g⁻¹ h⁻¹.

In certain embodiments, the reaction is initiated by utilizing light radiation or heat radiation, and the reaction is continued to progress by utilizing light radiation or heat radiation, wherein
power of the light radiation is 200-1500 W/m², preferably 200-1000 W/m², and most preferably 500-1000 W/m².

In certain embodiments, temperatures of the composite catalyst, and the hydrogen-containing source are raised by the light radiation, preferably the light radiation is the sole source for raising the temperatures.

In certain embodiments, the hydrogen-containing source is selected from a group consisting of water, saturated alcohols, carboxylic acids, phenols and any combination thereof, preferably water.

In certain embodiments, when the atomic sites include two or more chemical elements and are single atoms, the two or more elements may be arranged at intervals, or may be arranged randomly.

In certain embodiments, when the atomic sites are atomic clusters, compositions of respective atomic clusters may be the same or different, for example, respective atomic clusters may include different elementary composition, and/or include different numbers of atoms.

### BRIEF DESCRIPTION OF THE DRAWINGS

Fig. 1 illustrates a gas chromatography of a gaseous product obtained after reacted with liquid water as raw material by utilizing a Ru-Al₂O₃ composite catalyst and heat radiation.
Fig. 2 illustrates a gas chromatography of a gaseous product obtained after reacted with liquid water as raw material by utilizing an Au-Al₂O₃ composite catalyst and heat radiation.
Fig. 3 illustrates a transmission electron microscopy (TEM) image of a CoRu- TiO₂ composite catalyst.

### EMBODIMENTS

The invention demonstrated, unexpectedly, that a hydrogen-containing source, preferably water, could be converted to hydrogen molecules, using light radiation and/or heat radiation as energy input, in the presence of composite catalysts having plasmon effect.

Before further description of the present invention, certain terms employed in the specification, examples and appended claims are defined in the following section. The definitions listed herein should be read in light of the remainder of the disclosure and understood as by those skilled in the art. Unless defined otherwise, all technical and scientific terms as used herein have the same meaning as commonly understood by a person of ordinary skill in the art to which this invention belongs.

### DEFINITIONS

The term "catalyst" as used herein refers to substances that exhibit effects to increase the rate of a chemical reaction by reducing the activation energy of the reaction. The rate increasing effect is referred as "catalysis". Catalysts are not consumed in a catalytic reaction, therefore they can continue to catalyze the reaction of further quantities of reactant with a small amount.

The term "plasmon provider" as used herein refers to conductor whose real part of dielectric constant thereof is negative. Plasmon providers provide surface plasmons when excited by electromagnetic radiation.

The term "temperature-dependence" as used herein refers to properties that may vary when temperature changes by a given level. The temperature difference to alter the property may be any degrees, such as 0. 1°C, 1°C, 5°C, 10°C, 100°C, or 1000°C.

The term "chemical element" as used herein refers to chemical substance consisting of atoms having the same number of protons in their atomic nuclei. Specifically, chemical elements are those recorded in the periodic table of chemical elements. Chemical elements include natural elements and synthetic elements. Chemical elements also include elements not discovered yet with more than 118 protons in the atomic nuclei.

The term "bond" or "load" as used herein refers to bonded to or loaded on the surface, in the internal holes or internal lattices by physical manner or chemical manner, wherein the physical manner includes Van der Waals force, metallic bond and other conventional physical bonding manner, and the chemical manner includes ionic bond, covalent bond, coordination bond and other conventional chemical bonding manner.

The term "alloy" as used herein refers to a mixture of metals or a mixture of metal and other elements. Alloys are defined by metallic bonding character. An alloy may be a solid solution of metal elements (a single phase) or a mixture of metallic phases (two or more solutions).

The term "catalyst activity per unit" as used herein refers to a molar quantity of a product produced in unit time by active catalyst per unit mass, under certain reaction conditions. Specifically, catalyst activity per unit = a molar quantity of a reaction product/a mass of active catalyst/reaction time.

The term "close contact" as used herein refers to there is substantially no gap between the two components, e.g. a distance between the two components is 1 nm or less, 0.1 nm or less, or substantially 0 nm, preferably metallic bonds or coordinate bonds are formed between the two components.

The term "saturated alcohols" as used herein refers to saturated hydrocarbon compounds substituted by -OH group, for example, C₁-C₁₅ saturated alcohols, preferably C₁-Cs saturated alcohols, more preferably C₁-C₄ saturated alcohols such as methanol, ethanol, propanol, isopropanol, butanol, isobutanol.

The term "carboxylic acids" as used herein refers to saturated hydrocarbon compounds substituted by -COOH group, for example, C₁-C₁₅ carboxylic acids, preferably C₁-C₈ carboxylic acids, more preferably C₁-C₄ carboxylic acids, such as formic acid, acetic acid, propionic acid, isopropylic acid, butyric acid, isobutyric acid.

The term "phenols" as used herein refers to compounds comprising -OH group directly connecting to an aromatic ring, wherein the aromatic ring is a monocycle, bicycle or tricycle comprising 5-20 carbon atoms, preferably 5-20 carbon atoms, most preferably 5-15 carbon atoms, more preferably 6-12 carbons atoms, for example, the aromatic ring is benzene, naphthalene.

The term "metal-organic frameworks (MOF)" as used herein refers to organic-inorganic hybrid materials having intermolecular pores or metal-organic skeleton structure having periodic network structures formed from organic ligands and metal ions or clusters by means of self-assembly. The MOF may contain transition metals, rare-earth metals, main group metals such as alkali metals and alkaline-earth metals, for example, Cu, Zn, Cd, Fe, Ti, Mn, Al and Co, preferably Ti may be contained, non-metallic elements such as O, N, S, P, halogen (such as F, Cl, Br, I) and the like may be further contained. The MOF may be prepared by known methods in the art such as evaporation solvent method, diffusion method, hydrothermal or solvothermal method, ultrasonic and microwave method and the like.

### Plasmonic composite catalyst

One aspect of the present invention is composite catalysts used for producing hydrogen molecules by light radiation and/or heat radiation.

Without wishing to be bound by theory, the plasmonic composite catalyst of the present invention interacts with the raw materials of the reaction to reduce the activation energy of the reaction so as to initiate the reaction by utilizing light radiation and/or heat radiation, and to increase the reaction rate.

The plasmonic composite catalyst includes two structures: atomic sites and nano-base structure, wherein the atomic sites and the nano-base structure are contact with each other. In preferred embodiments, in the plasmonic composite catalyst, a mass percentage of the atomic sites and the nano-base structure is 50% or less, preferably 0.01% to 30%, preferably 0.01% to 5%, more preferably 0.01% to 2%, most preferably 0.1% to 1%.

### Atomic sites

The term "atomic sites" as used herein refers to mutually independent metal single atoms and/or mutually independent atomic clusters including 2-25, preferably 2-20 metal atoms, the metal single atoms and/or the atomic clusters are stably bonded to or loaded on surface and/or in internal pores and/or internal crystal lattices of the nano-base structure, preferably uniformly dispersed on the nano-base structure, more preferably uniformly dispersed on the surface of the nano-base structure. The metal single atoms or atoms in the atomic clusters are present in a valance state between zero valance state and the highest valance state that the metal usually present, an average valance state of the metal is, for example, 0 to +4, or 0 to +3, or 0 to +2, or 0 to +1, preferably 0. The distances between atoms in the atomic clusters are less than 1nm, preferably 0.1-0.5 nm.

Atoms in the atomic sites are bonded to atoms in the nano-base structure by physical manner or chemical manner, for example bonding by Van der Waals force, metallic bond and other conventional physical coupling manner, or bonding by ionic bond, covalent bond, coordination bond and other conventional chemical bonding manner, or forming complex by coordinate bonds.

When the atomic sites are mutually independent metal single atoms, the interaction between the metal single atoms and the atoms in the nano-base structure may prevent the metal single atoms from being agglomerated, and thus make it more stable. In certain embodiments, in the catalytic metal single atomic sites, all of the catalytic metal are present in form of isolated atoms, that is, a degree of dispersion of the catalytic metal atoms is 100%, and thus the catalytic metal atoms can be utilized to the maximum; preferably, all of the catalytic metal atoms are directly fixed to the surface of the nano-base structure and become 100% interface atoms, and thus the interaction of metal-base interface can be fully utilized to optimize the catalytic performance.

When the atomic sites are mutually independent metal atomic clusters, the metal atomic clusters are bonded with atoms in the nano-base structure by physical manner or chemical manner. The metal atomic clusters are stably dispersed on the nano-base structure and/or in the nano-base structure.

When the atomic sites are single atoms of single metal element, in certain embodiments, the single metal element works as both plasmon providers and catalytic property providers, the nano-base structure provides physical supporting function; in other embodiments, the single metal element works as plasmon provider, and the nano-base structure provides physical supporting function and works as catalytic property provider.

When the atomic sites are metal atomic clusters, in some embodiments, some atomic clusters comprising specific elements work as plasmon provider, other atomic clusters comprising specific elements word as catalytic property provider, the nano-base structure provides physical supporting function; in other embodiments, the atomic clusters work as plasmon provider, and the nano-base structure provides physical supporting function and works as catalytic property provider.

In other embodiments, the atomic sits and the nano-base structure work together as both plasmon provider and catalytic property provider, and the nano-base structure provides physical supporting function.

### NANO-BASE STRUCTURE

The term "nano-base structure" as used herein refers to a structure having a range of nanometer-scale dimension, i.e. about 1 nm to about 1000 nm, preferably about 70 nm to about 1000 nm, about100 nm to about 800 nm, about 200 nm to about 500 nm in at least one dimension of length, width, and height. The nano-base structure can have one dimension which exceeds 1000 nm, for example, have a length in a range of micrometer-scale, such as 1 µ m to 5 µm. In certain cases, tubes and fibers with only two dimensions within a range of nanometer-scale are also considered as the nano-base structures. Material having nano-base structure may exhibit size-related properties that differ significantly from those observed in bulk materials.

The nano-base structure of the present invention each independently is about 1 nm to about 3000 nm in length, width or height. The length thereof is preferably about 100 nm to about 3000 nm, more preferably about 500 nm to about 2500 nm, further more preferably about 1000 nm to about 2000 nm. The width or height thereof is preferably about 1 nm to about 1000 nm, preferably about 70 nm to about 1000 nm, more preferably about 100 nm to about 800 nm, further more preferably about 200 nm to about 500 nm.

The nano-base structure of the present invention each independently has an aspect ratio (i.e., a ratio of length to width/height) of about 1 to about 20, preferably an aspect ratio of about 1 to about 10, or about 2 to about 8. The nano-base structure of the present invention can also have a relatively small aspect ratio such as about 1 to about 2.

The nano-base structure of the present invention each independently has a shape of spherical, spike, flake, needle, blade of grass, columnar, polyhedral, 3D cone, cuboidal, sheet, hemispherical, irregular 3D shape, porous structure or any combinations thereof.

The nano-base structure is selected from a group consisting of Mn, Co, Ce, Fe, Al, Ca, Ce, Cu, Ni, Ti, Zn, Si, Mo, Bi, V, C, N and oxides, nitrides, sulfites, carbides, hydroxides, chlorides thereof and metal-organic frameworks.

The term "nano-base structure" as used herein comprises more than 25, preferably more than 30 atoms.

A plurality of the nano-base structures of the present invention can be arranged in a patterned configuration, preferably in a plurality of layers, or a plurality of the nano-base structures may be randomly dispersed in a medium. For example, the nano-base structures may be bonded to a substrate. In such case, the nano-base structures are generally not aggregated together, but rather, are arranged or stacked in an orderly parttern. Alternatively, a plurality of the nano-base structures can be dispersed in a liquid medium, in which each nano-base structure is free to move with respect to any other nano-base structures.

For example, the nano-base structure could have a spike or blade of grass-like geometric configuration. Optionally, the nano-base structure has a flaky geometric configuration with a relative thin thickness. Preferably, the nano-base structure has a configuration of nano-jungle, nano-grass, and/or nano-snowflake. The nano-base structure could have a relative large aspect ratio, such nanostructure could have a construction of nano-spike, nano-snowflake or nano-needle. The aspect ratio could be about 1 to about 20, about 1 to about 10, or about 2 to about 8. Preferably, the length of the nano-base structure could be about 100 nm to about 3000 nm, about 500 nm to about 2500 nm, or about 1000 nm to about 2000 nm;the width or height could be about 1nm to about 1000 nm, about 70 nm to about 1000 nm, about 100 nm to about 800 nm, or about 200 nm to about 500 nm.

The nano-base structures may be bonded to a substrate. Accordingly, the nano-base structures are generally not aggregated together, but rather, are arranged in an orderly parttern. The substrate can be formed of metal or polymer material (e.g., polyimide, PTFE, polyester, polyethylene, polypropylene, polystyrene, polyacrylonitrile, etc.)

In other embodiments, the nano-base structure has a shape of spherical, columnar, polyhedral, 3D cone, cuboidal, sheet, hemispherical, irregular 3D shape, porous structure or any combinations thereof. Such nano-base structures each independently is about 1 nm to about 1000 nm, preferably about 70 nm to about 1000 nm, about 100 nm to about 800 nm, or about 200 nm to about 500 nm in length, width or height.

Furthermore, the plasmonic atomic catalyst of the present invention could function in various states, such as dispersed, congregated, or attached/grew on surface of other materials. In preferred embodiments, the plasmonic atomic catalyst are dispersed in a medium, the medium is preferably the reactants of the reaction, such as water.

### METHOD FOR PRODUCING HYDROGEN MOLECULES

Another aspect of the present invention is a method for producing hydrogen molecules by light radiation and/or heat radiation, comprising:
contacting a plasmonic composite catalyst with at least one hydrogen-containing source; and
subjecting the plasmonic composite catalyst and the hydrogen-containing source to light radiation and/or heat radiation, to produce hydrogen molecules.

Under catalytic effects of the plasmonic composite catalyst, the energy radiation, i.e., light radiation and/or heat radiation, initiates the reaction of the hydrogen-containing source. The reaction decomposing hydrogen-containing source, preferably water to produce hydrogen molecules is an endothermic reaction. Without wishing to be bound by theory, the plasmonic composite catalyst could convert and transmit energy of light radiation and heat radiation, so as to keep the reaction of the present invention progressing. In certain temperature range, raising the temperature leads to a higher energy conversion rate of producing hydrogen molecules.

The light radiation and/or heat radiation step is carried out at a temperature between about 20°C to about 800°C, about 20°C to about 500°C, about 50°C to about 300°C, about 70°C to about 250°C, about 90°C to about 200°C, about 100°C to about 200°C, about 100°C to about 180°C, about 110°C to about 160°C, about 120°C to about 150°C, about 130°C to about 150°C. A catalyst activity per unit for producing hydrogen is more than 2 µmol g⁻¹ h⁻¹, preferably more than 3 µmol g⁻¹ h⁻¹, more preferably more than 7 µmol g⁻¹ h⁻¹, at the above temperature.

The term "heat" as used herein refers to thermal energy transferred from one system to another as a result of thermal interactions. Heat may be transferred into the reaction system from an external heat source, alternatively, heat may be carried by one component of the reaction so as to be transferred to other components involved in the reaction. In other words, the one component that carries heat before reaction is an internal heat source. In certain embodiments, temperatures of the plasmonic composite catalyst and the hydrogen-containing source during the reaction of the present invention are raised by heat radiation.

In the reaction of the present invention, the light radiation mimics the wavelength composition and the strength of solar light, thus the temperature of the radiated catalyst and reactants could be raised. When the radiation intensity reaches a certain level, the temperatures of the plasmonic composite catalyst and the hydrogen-containing source are raised by the light radiation. Preferably, light radiation is the sole source for raising the temperature.

In the reaction of the present invention, after the reaction is initiated, the reaction is continued to progress under light radiation. The term "light" as used herein refers to electromagnetic wave having a wavelength from about 250 nm to about 2000 nm. In other words, light refers to the radiance of visible light. Preferably, in the reaction of the present invention, the power of light radiation is less than the power of solar radiation (i.e., the solar constant). For example, the power of light radiation is 200-1500 W/m², preferably 200-1000 W/m², and most preferably 500-1000 W/m². The light radiation could be solar light or light emitted from artificial light sources, wavelength of the light radiation is between about 250 nm to about 2000 nm.

The reaction time varies depending on reaction scale, radiation intensity, temperature and other factors, the reaction is continuously performed utilizing a well-established apparatus with a continuous feed of the hydrogen-containing source. The reaction time could be 0.1 hour or more, preferably 0.1 hour to 1000 hours, preferably 0.1 hour to 500 hours, preferably 0.5 hour to 100 hours, preferably 1 hour to 50 hours, preferably 2 hours to 30 hours, most preferably 4 hours to 20 hours.

The reaction could be carried out at low pressure, normal pressure or high pressure, the reaction pressure could be properly selected based on reaction scale, radiation intensity, temperature and other factors, for example, the reaction pressure could be at least 1 bar, e.g. 1 bar to 30 bar, preferably 1 bar to 20 bar, more preferably 1.5 bar to 5 bar.

### REACTION MATERIALS

In the reaction of the present invention, reaction materials include hydrogen-containing source such as water, saturated alcohols, carboxylic acids, and phenols, preferably water such as pure water or hard water, and water may be gaseous or liquid.

### REACTION PRODUCTS

Hydrogen molecules could be produced by the reaction of the present invention. Without wishing to be bound by theory, decompositions and recombinations of various reaction raw materials molecules on the atomic sites and the nano-base structure of the plasmonic composite catalysts could be included in the reaction mechanism of the present invention.

### EXAMPLES

### Example 1 Preparation of the composite catalyst

Ru-Al₂O₃ (Ru was loaded on or bonded to Al₂O₃) composite catalyst and Au-Al₂O₃

(Au is loaded on or bonded to Al₂O₃) composite catalyst were prepared according following method:
17.6 mg of ruthenium trichloride was dissolved in 5 mL of deionized water and ultrasonically mixed at room temperature for 60 min; then 2 g of active alumina was added and ultrasonically mixed at 40°C for 60 min, the dried solid was collected and washed with deionized water for 5 times to obtain a precursor of Ru-Al₂O₃. 20 mL of a solution obtained by mixing 20 mL of sodium hydroxide adjusted to pH 12.0 previously and 0.4 g of sodium borohydride in solid form was added to the precursor slowly, a solid obtained by stirred evenly and vacuum filtrated, the obtained solid was washed with deionized water for 3 times and dried in nitrogen atmosphere at 80°C, to obtain the Ru-Al₂O₃ composite catalyst. The Au-Al₂O₃ composite catalyst was obtained by replacing RuCl₃ in the above procedure by 3.4 mg of chloroauric acid (HAuCl₄).

RuCo-TiOg (Ru and Co were loaded on or bonded to TiO₂) composite catalyst were

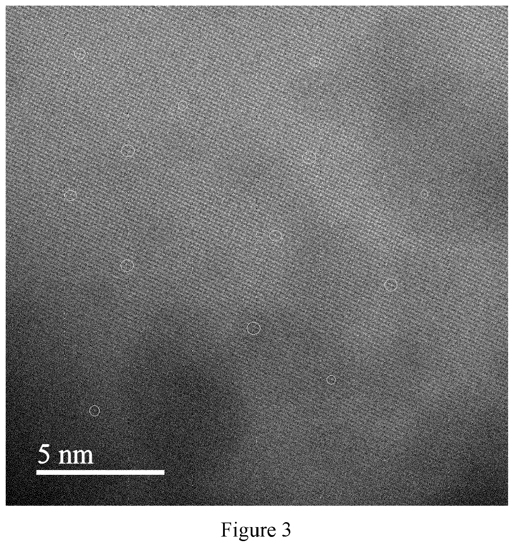

prepared according following method:
0.2 g of titanium dioxide (TiO₂, anatase, 5-10 nm, hydrophilic type) was weighed and put in a 500 mL beaker, then 200 mL of deionized water was added, after magnetically stirred for 15 min, 100 mL of 1 mol/L ammonium carbonate ((NH4)₂CO₃) solution was add and stirred for 5 min, the obtained solution was labeled as solution A. A mixed solution containing 0.0020 g of ruthenium trichloride hydrate (RuCl₃•xH₂O) and 0.0014 g of cobalt nitrate hexahydrate (C_{O}(NO₃)₂•6H₂O) was dissolved in 100 mL of deionized water and treated with ultrasonication for 10 min, and the obtained solution was slowly added dropwise into the solution A. The obtained suspension was aged at room temperature for 2.5 h, the precipitate was centrifugally washed for 3 times at 12500 rpm and then dried at 60°C for 12 h in an oven, and the RuCo-TiO₂ composite catalyst was obtained. The high-resolution electron microscopy image of the RuCo-TiO₂ composite catalyst was shown in Fig. 3.

Au-CeOg (Au was loaded on or bonded to CeOg) composite catalyst was prepared

according following method:

1.73 g of cerium nitrate hexahydrate (CeNO₃•6H₂O) and 0.0068 g of tetrachloroauric acid (HAuCl₄•3H₂O) were dissolved in 10 mL of deionized water, after completely dissolved, the solution was slowly added dropwise to 70 mL of 6 mol/L sodium hydroxide (NaOH) solution. After continuously stirring at room temperature for 30 min, the suspension was transferred to a 100 mL polytetrafluoroethylene-lined stainless reactor, and then held at 120°C for 12 h. After reaction, the reactor was cooled down to room temperature naturally, the precipitation was collected by centrifugation and washed with deionized water until pH value of the washing liquid was 7, and then dried at 60°C for 12 h in an oven. The dried sample was fully grounded, placed in a tube furnace, heated to 400°C with a heating rate of 5°C/min and then held for 2 h, so as to obtain the Au-CeO₂ composite catalyst as the catalyst used in experiments.

### Example 2 Thermal catalytic reaction for producing hydrogen

The catalyst was the Ru-Al₂O₃ composite catalyst with Al₂O₃ as nano-base structure prepared according to Example 1, and showed a morphology of irregular spherical particles having diameters of 500-1000 nm after characterized by SEM. Isolated Ru metal single atoms were distributed uniformly on the surface of Al₂O₃, and intervals between the metal single atoms are 5-20 nm.

0.1 g of Ru-Al₂O₃ composite catalyst and 6 mL of ultrapure water were added into a sealable pressure-bearing iron tube having a volume of 35 mL, 4 bar Ar was filled into the glass tube after air in the glass tube was replaced with Ar. The iron tube was placed in a temperature-controlled oven, and heated to initiate the reaction. The temperature in the oven was controlled to 130°C ± 10°C, and the reaction was continued for 18 h.

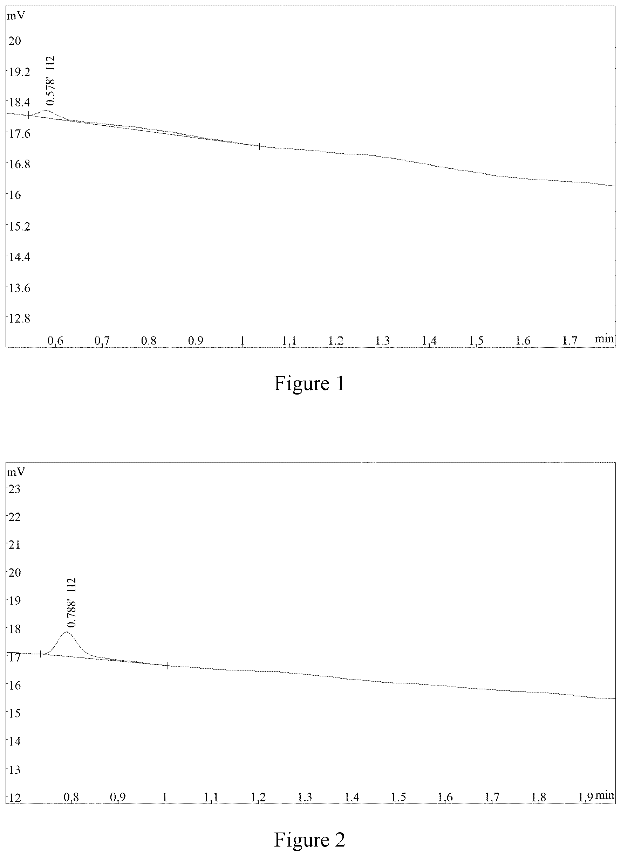

After the thermalcatalytic reaction, hydrogen content of the gas in the reaction tube was characterized by a gas chromatography with a thermal conductivity detector (TCD). The gas chromatography of the product obtained from the thermal catalytic reaction utilizing the Ru-Al₂O₃ composite catalyst was shown in Fig. 1, after calculation, the hydrogen content was 2053 ppm, the catalyst activity per unit for producing hydrogen was about 6.44 µmol g⁻¹ h⁻¹. After continuously reacted for 10 cycles (180 h), the catalytic activity of the catalyst for producing hydrogen did not decline.

### Example 3 Thermal catalytic reaction for producing hydrogen

The catalyst was the Au-Al₂O₃ composite catalyst with Al₂O₃ as nano-base structure prepared according to Example 1, and showed a morphology of irregular spherical particles having diameters of 500-1000 nm after characterized by SEM. Isolated Au metal single atoms were distributed uniformly on the surface of Al₂O₃, and intervals between the metal atoms are 5-20 nm.

The thermal catalytic reaction was carried out in the same manner as Example 2, by utilizing 0.1g of Au-Al₂O₃ composite catalyst. The temperature in the oven was controlled to 130°C± 10°C, and the reaction was continued for 18 h.

The gas was characterized by means of gas chromatography in the same manner as Example 2. The gas chromatogram of the product obtained from the thermal catalytic reaction utilizing the Au-Al₂O₃ composite catalyst was shown in Fig. 2, after calculation, the hydrogen content was 2890 ppm, the catalyst activity per unit for producing hydrogen was about 9.073 µmol g⁻¹ h⁻¹. After continuously reacted for 10 cycles (180 h), the catalytic activity of the catalyst for producing hydrogen did not decline.

### Example 4 Thermal catalytic reaction for producing hydrogen

The catalyst was the Au-CeO₂ composite catalyst with CeO₂ as nano-base structure prepared according to Example 1, and showed a morphology of irregular spherical particles having diameters of 400-1500 nm after characterized by SEM. Isolated Au metal single atoms were dispersed uniformly on the surface of CeO₂, and intervals between the metal single atoms are 5-20 nm.

The thermal catalytic reaction was carried out in the same manner as Example 2, by utilizing 0.1g of Au-CeO₂ composite catalyst. The temperature in the oven was controlled to 130°C± 10°C, and the reaction was continued for 18 h.

The gas was characterized by means of gas chromatography in the same manner as Example 2. By calculation, the hydrogen content was 1862 ppm, and the catalyst activity per unit for producing hydrogen was about 5.845 µmol g⁻¹ h⁻¹. After continuously reacted for 10 cycles (180 h), the catalytic activity of the catalyst for producing hydrogen did not decline.

### Example 5 Thermal catalytic reaction for producing hydrogen

The catalyst was the RuCo-TiO₂ composite catalyst with TiO₂ as nano-base structure, and showed a morphology of irregular spherical particles having diameters of 600-1500 nm after characterized by SEM. Isolated Ru, Co metal single atoms or atomic clusters were dispersed uniformly on the surface of TiO₂, and intervals between the metal single atoms or the atomic clusters are 5-20 nm.

The thermal catalytic reaction was carried out in the same manner as Example 2, by utilizing 0.2g of RuCo-TiO₂ composite catalyst. The temperature in the oven was controlled to 130°C± 10°C, and the reaction was continued for 18 h.

The gas was characterized by means of gas chromatography in the same manner as Example 2. By calculation, the hydrogen content was 6863 ppm, and the catalyst activity per unit for producing hydrogen was about 10.77 µmol g⁻¹ h⁻¹. After continuously reacted for 10 cycles (180 h), the catalytic activity of the catalyst for producing hydrogen did not decline.

### Example 6 Photocatalytic reaction for producing hydrogen

The RuCo-TiO₂ composite catalyst used in Example 5 was used.

0.2 g of RuCo-TiO₂ composite catalyst and 6 mL of ultrapure water were added into a 35 mL sealable pressure-bearing glass tube, 4 bar Ar was filled into the glass tube after air in the tube was replaced with Ar. The glass tube was laid flat on glass wool, so that the catalyst and water were tiled evenly, and a halogen lamp with controlled voltage was employed to radiate vertically from above. The intensity of the incident light was about 1000 W/m². Thermocouples were connected to the lower part of the glass tube to monitor the temperature. The temperature of the glass tube was controlled to 50°C± 10°C, the radiation was continued for 18 h to conduct the photocatalytic reaction.

After the photocatlytic reaction, the gas obtained in the reaction was characterized by a gas chromatogram in the same manner as Example 2, and the hydrogen content was 1848 ppm. By calculation, the catalyst activity per unit for producing hydrogen was about 2.901 µmol g⁻¹ h⁻¹. After continuously reacted for 10 cycles (180 h), the catalytic activity of the catalyst for producing hydrogen did not decline.

As can be seen from the results of Examples 2 to 6, in a case of the overall reaction conditions were mild, e.g., in a case of the power of the light radiation was lower than that of the solar light, the method of the present invention could directly convert readily available raw materials into hydrogen with high efficiency, by utilizing cost-effective catalysts.

In this specification and the appended claims, the singular forms "a", "an", and "the" include plural reference, unless the context clearly indicates otherwise. Unless defined otherwise, all technical and scientific terms as used herein have the same meaning as commonly understood to a person of ordinary skill in the art. Methods recited herein may be carried out in any order that is logically possible, in addition to a particular order disclosed.

The representative examples are intended to help illustrate the invention, and are not intended to, nor should they be construed to, limit the scope of the invention. Indeed, various modifications of the invention and many further embodiments thereof, in addition to those shown and described herein, will become apparent to those skilled in the art from the full contents of this document, including the examples and the references to the scientific and patent literature included herein. The examples contain important additional information, exemplification and guidance that can be adapted to the practice of this invention in its various embodiments and equivalents thereof.

## Claims

1. A method for producing hydrogen by means of energy radiation, comprising:
contacting a composite catalyst with at least one hydrogen-containing source, and
subjecting the composite catalyst and the hydrogen-containing source to energy radiation, to produce hydrogen molecules, wherein
the composite catalyst comprises at least one nano-base structure and at least one atomic sites, the atomic sites comprise one or two or more chemical elements selected from Ru, Rh, Ag, Au, Pt, Pd, Os, and Ir, preferably one or two selected from Ru and Au.

2. The method according to claim 1, wherein
the atomic sites further comprises one or two or more chemical elements selected from Mn, Co, Fe, Al, Cu, Ni, Zn, Ti and La, preferably one or two or more selected from Co, Fe and Mn.

3. The method according to claim 1 or 2, wherein
the energy radiation is at least one selected from light radiation and heat radiation, preferably light radiation.

4. The method according to any one of claims 1 to 3, wherein
a distance between the nano-base structure and the atomic sites is 5 nm or less, preferably 1 nm or less, more preferably less than 0.1 nm, and most preferably the nano-base structure and the atomic site are in close contact with each other.

5. The method according to any one of claims 1 to 4, wherein
the atomic sites are bonded with the nano-base structure, for example by physical manner or chemical manner.

6. The method according to any one of claims 1 to 5, wherein
a mass percentage of the atomic sites and the nano-base structure is 50% or less, preferably 0.01% to 30%, preferably 0.01% to 5%, more preferably 0.01% to 2%, most preferably 0.1% to 1%.

7. The method according to any one of claims 1 to 6, wherein
the atomic sites are loaded on surface, internal pores of the nano-base structure, or distributed in internal crystal lattices of the nano-base structure, preferably respective atomic sites are dispersed uniformly, and
intervals between respective atomic sites are 0.2-500 nm, preferably 1-50 nm, more preferably 1-10 nm.

8. The method according to any one of claims 1 to 7, wherein
the nano-base structure is selected from a group consisting of Mn, Co, Ce, Fe, Al, Ca, Ce, Cu, Ni, Ti, Zn, Si, Mo, Bi, V, C, N and oxides, nitrides, sulfites, carbides, hydroxides, chlorides thereof and metal-organic frameworks (MOF), preferably the metal-organic frameworks, TiO₂, Al₂O₃ or CeO₂.

9. The method according to any one of claims 1 to 8, wherein
the composite catalyst is a catalyst in which Ru and Co are loaded on or bonded to TiO₂, a catalyst in which Ru is loaded on or bonded to Al₂O₃, a catalyst in which Au is loaded on or bonded to Al₂O₃, or a catalyst in which Au is loaded on or bonded to CeO₂.

10. The method according to any one of claims 1 to 9, wherein
the nano-base structure is about 1 nm to about 1000 nm, preferably about 70 nm to about 1000 nm, about 100 nm to about 800 nm, about 200 nm to about 500 nm in at least one dimension of length, width and height.

11. The method according to any one of claims 1 to 10, wherein
the nano-base structure each independently is about 1 nm to about 3000 nm in length, width or height, preferably is about 100 nm to about 3000 nm, about 500 nm to about 2500 nm, or about 1000 nm to about 2000 nm in length, and/or about 1 nm to about 1000 nm, about 70 nm to about 1000 nm, about 100 nm to about 800 nm, or about 200 nm to about 500 nm in width or height, or
the nano-base structure each independently has an aspect ratio of about 1 to about 20, preferably an aspect ratio of about 1 to about 10, or about 2 to about 8.

12. The method according to any one of claims 1 to 11, wherein
the nano-base structure each independently has a shape of spherical, spike, flake, needle, blade of grass, columnar, polyhedral, 3D cone, cuboidal, sheet, hemispherical, irregular 3D shape, porous structure or any combinations thereof.

13. The method according to any one of claims 1 to 12, wherein
a plurality of the atomic sites are arranged in a patterned configuration, preferably in a plurality of layers, on the nano-base structure, or
a plurality of the atomic sites are dispersed randomly in the nano-base structure and/or on an surface of the nano-base structure.

14. The method according to any one of claims 1 to 13, wherein
the energy radiation allows the reaction progresses at a temperature between about 20°C to about 500°C, preferably about 50° C to about 300°C, about 70°C to about 250°C, about 90°C to about 200°C, about 100° C to about 200°C, about 100°C to about 180°C, about 110°C to about 160°C, about 120°C to about 150°C, about 130°C to about 150°C.

15. The method according to any one of claims 3 to 14, wherein
the reaction is initiated by utilizing light radiation or heat radiation, and the reaction is continued to progress by utilizing light radiation or heat radiation, wherein
light radiation power of the light radiation is 200-1500 W/m², preferably 200-1000 W/m², and most preferably 500-1000 W/m².

16. The method according to any one of claims 3 to 15, wherein
temperatures of the composite catalyst and the hydrogen-containing source are raised by the light radiation, preferably the light radiation is the sole source for raising the temperatures.

17. The method according to any one of claims 1 to 16, wherein
the hydrogen-containing source is selected from a group consisting of water, saturated alcohols, carboxylic acids, phenols and any combination thereof, preferably water.
